# FASCICULE DE BREVET EUROPEEN

(11) **EP 0 686 289 B1**
(45) Date de publication et mention de la délivrance du brevet: **07.07.1999**
(21) Numéro de dépôt: 95905168.1
(22) Date de dépôt: 26.12.1994
(51) Int. Cl.: G06K 7/06

(54) **CONNECTEUR ELECTRIQUE POUR LE RACCORDEMENT D'UNE CARTE A MEMOIRE ELECTRONIQUE**
ELEKTRISCHER VERBINDER ZUM VERBINDEN VON EINER ELEKTRONISCHEN SPEICHERKARTE
ELECTRIC CONNECTOR FOR CONNECTING AN ELECTRONIC MEMORY CARD

(30) Priorité: 24.12.1993 FR 9315633
(43) Date de publication de la demande: 13.12.1995
(60) Demande divisionnaire: 97201929.3
(73) Titulaire: ITT COMPOSANTS ET INSTRUMENTS, F-92220 Bagneux (FR)
(72) Inventeur: BRICAUD, Hervé, F-39100 Dole (FR); JURET, Bernard, F-39100 Dole (FR)
(74) Mandataire: Kohn, Philippe
(86) Numéro de dépôt international: FR9401532
(87) Numéro de publication internationale: WO9518421

(56) Documents cités:
- EP-A- 0 366 513
- EP-A- 0 455 297
- EP-A- 0 520 080
- DE-A- 3 602 668
- DE-U- 9 213 682
- FR-A- 2 587 549
- FR-A- 2 633 754

## Description

La présente invention concerne un connecteur électrique pour le raccordement d'une carte à mémoire électronique comportant sur une de ses faces principales une pluralité de plages de contact électrique alignées parallèlement à la direction d'introduction de la carte dans un dispositif de lecture-écriture.

L'invention concerne plus particulièrement un connecteur du type comportant un support en matériau isolant réalisé par moulage présentant une face plane parallèle à la direction d'introduction de la carte et une pluralité de conducteurs électriques en forme de lames déformables élastiquement qui s'étendent parallèlement à la direction d'introduction de la carte, chaque lame de contact comprenant une première extrémité incurvée de contact avec l'une des plages de la carte faisant saillie hors du plan de la face plane du support, une portion médiane de liaison de la lame au support et une seconde extrémité de raccordement de la lame à un circuit de traitement du dispositif de lecture-écriture, chaque lame de contact s'étendant parallèlement à la direction d'introduction.

Selon une conception connue, qui est par exemple décrite et représentée dans le document FR-A-2.638.293, chaque lame de contact se présente sous la forme d'une poutre encastrée à l'une de ses extrémités dans le matériau isolant du support et qui s'étend longitudinalement depuis cette extrémité pour se terminer par une extrémité libre incurvée de contact. Ce document divulgue les caractéristiques du préambule de la revendication 1.

Cette conception a pour inconvénient d'être encombrante du fait de la longueur de chaque lame de contact nécessaire pour qu'elle présente une élasticité suffisante lui permettant d'assurer une force de contact déterminée avec une plage correspondante d'une carte.

De plus, selon cette conception connue, ou selon celle décrite et représentée dans le document FR-A-2.587.549, la fixation de chaque lame dans le support est réalisée par surmoulage de matériau isolant autour de la partie d'extrémité libre de chaque lame qui assure son encastrement.

Cette technique est particulièrement coûteuse à mettre en oeuvre dans la mesure où elle nécessite, notamment lorsqu'elle est automatisée, de prévoir des moyens de maintien en place des lames de contact dans le moule pour la réalisation du support.

La présente invention a pour but de proposer une nouvelle conception d'un connecteur électrique pour le raccordement d'une carte à mémoire électronique qui remédie aux inconvénients qui viennent d'être mentionnés.

Dans ce but, l'invention propose un connecteur électrique du type mentionné précédemment, caractérisé en ce que la partie médiane de liaison de chaque lame comporte des moyens de fixation de la lame au support qui sont constitués par une patte latérale d'accrochage en forme de harpon qui est reçue dans une fente correspondante du support.

DE-U-9 213 682 et EP-A-0 455 297 divulguent des connecteurs ayant des lames fixées dans le support du connecteur grâce à une partie en forme de harpon. Toutefois, cette forme de harpon se trouve sur le corps principal de la lame, et non sur une patte latérale comme dans l'invention. Il en résulte une plus grande liberté quant à la taille et la forme de la lame du connecteur de l'invention.

Selon d'autres caractéristiques préférentielles de l'invention :
- la partie médiane de liaison comporte une première branche dont l'extrémité libre se prolonge par l'extrémité de raccordement de la lame ;
- l'extrémité libre de la première branche de la partie médiane de liaison de la lame est encastrée dans un logement du support, et la première branche s'étend en regard d'un logement formé en vis-à-vis dans la face plane du support pour permettre un fléchissement de la première branche selon une direction sensiblement perpendiculaire à la face plane du support ;
- la patte latérale d'accrochage s'étend parallèlement à la partie médiane de liaison de la lame , et elle est reçue dans une fente du support qui est parallèle à la direction générale du logement qui reçoit l'extrémité libre encastrée de la première branche de la partie médiane de liaison de la lame ;
- le logement en regard duquel s'étend la première branche de la partie médiane de liaison de la lame comporte un fond qui limite le fléchissement de la première branche ;
- le connecteur comporte un couvercle en matériau isolant qui prend appui sur la face plane du support et qui comporte une série de fentes parallèles à travers chacune desquelles fait saillie une extrémité incurvée de contact d'une lame ;
- l'extrémité incurvée de contact de chaque lame se prolonge par un bec qui est sollicité élastiquement en appui contre une surface de butée ;
- la surface de butée est formée en vis-à-vis dans la face interne du couvercle qui s'étend en regard de la face plane du support ;
- la patte latérale d'accrochage est reliée à la première branche de la partie médiane de liaison par une traverse qui s'étend depuis l'extrémité libre encastrée de la première branche de la partie médiane de liaison de la lame ;
- l'extrémité de raccordement de chaque lame s'étend selon une direction perpendiculaire au plan de la face plane du support en éloignement de la seconde branche de la partie médiane de liaison de la lame et le long d'une face latérale du support ;
- la partie médiane de liaison de chaque lame est une partie repliée en forme d'épingle à cheveux s'étendant sensiblement parallèlement à la face plane du support comportant la première branche dont l'extrémité libre se prolonge par l'extrémité de raccordement de la lame et qui comporte des moyens de fixation de la lame au support, et comportant une seconde branche dont l'extrémité libre se prolonge par l'extrémité incurvée de contact de la lame ;
- l'extrémité incurvée de contact de chaque lame s'étend sensiblement au droit de l'extrémité libre encastrée de la première branche de la partie médiane de liaison de la lame ;
- chaque lame de contact est réalisée sous la forme d'une bande métallique découpée et pliée d'épaisseur sensiblement constante, et chaque bande de contact comporte un tronçon intermédiaire d'épaisseur réduite réalisé notamment par écrasement, qui s'étend entre les extrémités de contact et de raccordement de la lame ;
- le tronçon d'épaisseur réduite s'étend entre l'extrémité libre de la première branche et l'extrémité libre de la seconde branche ;
- l'extrémité incurvée de contact est située longitudinalement entre le pli médian qui relie entre elles les première et seconde branches de la partie médiane de liaison, et l'extrémité de raccordement le pli médian étant tourné vers le centre du connecteur.

D'autres caractéristiques et avantages de l'invention apparaîtront à la lecture de la description détaillée qui va suivre pour la compréhension de laquelle on se reportera aux dessins annexés dans lesquels :
- La figure 1 est une vue latérale en élévation d'un connecteur réalisé conformément aux enseignements de l'invention ;
- la figure 2 est une vue de dessus du connecteur illustré à la figure 1 ;
- la figure 3 est une vue latérale à plus grande échelle et en coupe partielle selon la ligne 3-3 de la figure 4, du connecteur illustré aux figures 1 et 2 ;
- la figure 4 est une vue de dessus du connecteur illustré à la figure 3 avec arrachement d'une moitié du couvercle du connecteur ;
- la figure 5 est une demi-vue en section selon la ligne 5-5 de la figure ;
- la figure 6 est une vue similaire à celle de la partie supérieure droite de la figure 1 qui illustre une variante de réalisation d'un connecteur conforme aux enseignements de l'invention du type comportant des lames de contact en forme d'épingle à cheveux ;
- la figure 7 est une vue similaire à celle de la figure 6 qui illustre une autre variante de réalisation dans laquelle le connecteur comporte des lames de contact parallèles sensiblement rectilignes et comportant des moyens de fixation du type à harpon ; et
- la figure 8 est une vue de dessus d'une des lames de contact équipant le connecteur de la figure 7.

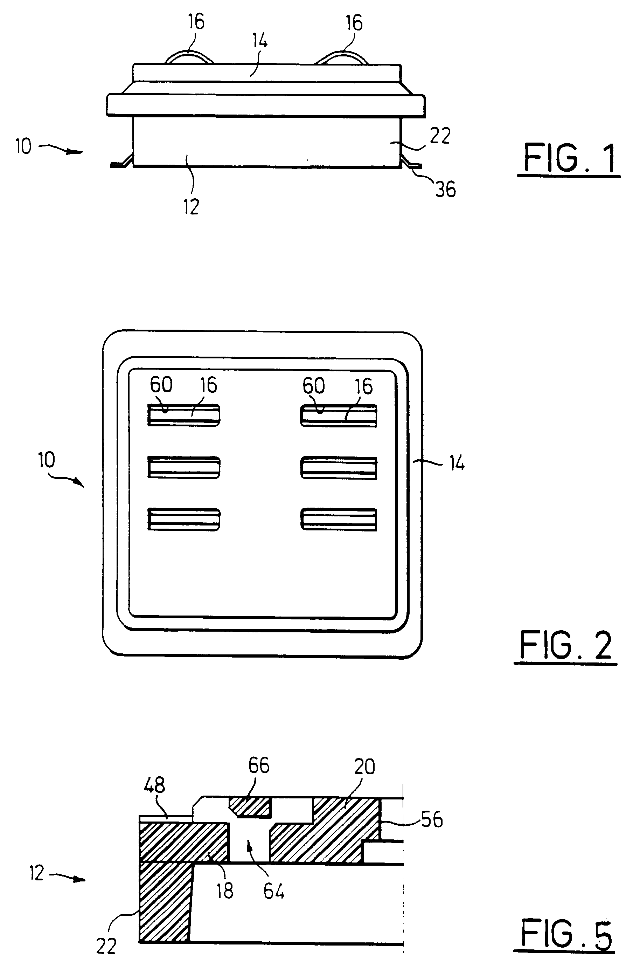

Le connecteur 10 illustré sur les figures 1 à 5 est pour l'essentiel constitué par un boîtier ou support en matériau isolant 12 et par un couvercle 14 en matière plastique moulée, et par une série de conducteurs électriques 16.

Comme on peut le voir sur les figures, le boîtier ou support 12 est pour l'essentiel constitué d'une plaque horizontale 18 qui délimite une face plane 20 et d'une paroi latérale 22 de contour sensiblement rectangulaire.

La face supérieure 20 de contour rectangulaire comporte une série de logements 24 formés en creux dans la face supérieure 20 de la plaque 18.

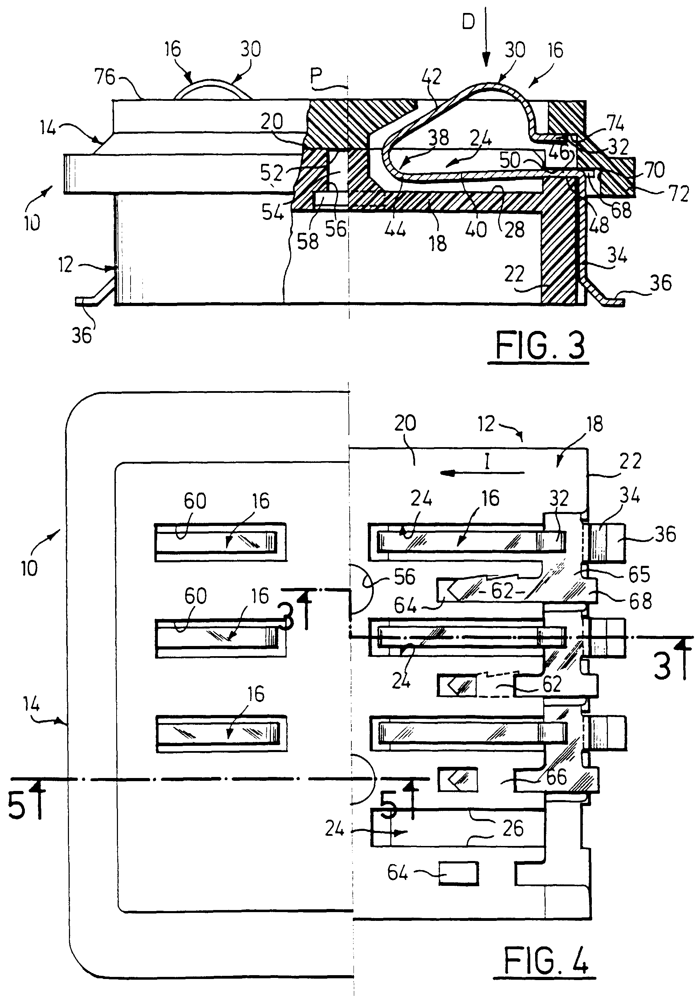

Dans le mode de réalisation illustré sur les figures, le connecteur présente une symétrie générale de conception par rapport à un plan vertical médian P indiqué sur les figures 3 et 4 et le support 12 comporte ainsi deux séries de quatre logements 24 alignés deux à deux.

Chaque logement 24 se présente sous la forme d'une encoche à bords ou faces parallèles 26 qui est délimité par un fond de logement 28 qui s'étend dans un plan parallèle à la face plane supérieure 20 du boîtier 12.

Chaque logement 24 est conçu pour recevoir un conducteur électrique 16 qui est réalisé dans un matériau conducteur déformable élastiquement.

Chaque élément 16 est ainsi réalisé sous la forme d'une lame de contact découpée et pliée.

Chaque lame de contact 16 s'étend selon une direction générale longitudinale contenue dans un plan vertical parallèle aux faces parallèles 26 du logement correspondant 24 et perpendiculaire à la face 20 du support 12.

Chaque lame de contact 16 comporte une première extrémité incurvée convexe 30 qui est prévue pour coopérer avec une plage correspondante (non représentée) d'une carte à mémoire électronique qui est susceptible d'être introduite, selon une direction I parallèle aux logements 24, dans un dispositif de lecture-écriture (non représenté) équipé d'un connecteur 10 selon l'invention.

L'extrémité incurvée de contact 30 de chaque lame 16 se prolonge par un bec 32 sensiblement parallèle à la face plane 20 dont la fonction sera expliquée par la suite.

Chaque lame de contact 16 comporte également une extrémité de raccordement 34 qui s'étend verticalement, c'est-à-dire selon une direction perpendiculaire à la face supérieure 20, le long de la paroi latérale 22 du support 12 et qui se termine par une patte rabattue à angle droit 36 permettant le raccordement de chaque lame 16 sur une piste d'une plaque à circuit imprimé (non représentée), par exemple selon la technique du report à plat des composants.

L'extrémité incurvée de contact 30 et l'extrémité de raccordement 34 sont reliées entre elles par une partie médiane de liaison 38 en forme d'épingle à cheveux.

La partie médiane de liaison 38 de chaque lame 16 comporte ainsi une première branche 40 qui s'étend selon une direction sensiblement parallèle à la face plane 20 du support 12 et une seconde branche 42 formant un angle aigu par rapport à la première branche 30 et qui sont reliées entre elles par le pli médian en forme de U 44.

Ce pli médian 44 est tourné vers le centre du connecteur c'est à dire qu'il est situé sensiblement au droit de la puce de la carte à puce lorsque cette dernière est en position de lecture_écriture.

Cette disposition géométrique confère au connecteur selon l'invention une très grande compacité et un faible encombrement sur la carte à circuit imprimé sur laquelle il sera monté.

En effet, la longueur du connecteur, mesurée parallèlement à la direction longitudinale des lames 16 est la plus réduite possible.

L'extrémité libre 46 de la première branche 40 se prolonge par l'extrémité de raccordement 34 de la lame 16 tandis que l'extrémité libre de la seconde branche 42 de la partie médiane de liaison 38 se prolonge par l'extrémité incurvée de contact 30.

L'extrémité libre 46 de la première branche 40 de chaque lame 16 est maintenue encastrée de façon que la partie médiane de liaison 38, et notamment la première branche 40 puisse fléchir élastiquement selon une direction D sensiblement perpendiculaire au plan de la face plane du support 12.

A cet effet, l'extrémité 46 est pincée entre une portion plane 48 du support 12 parallèle à la face plane 20 de ce dernier, mais décalée verticalement vers le bas par rapport à cette face supérieure 20, et une portion de surface correspondante 50 formée en vis-à-vis dans la face interne 52 du couvercle 14 qui prend appui contre la face supérieure plane 20 du support 12.

En effet, et comme on peut le voir sur les figures 3 et 4, le couvercle 14 est fixé au boîtier 12 et par sertissage à chaud grâce à deux plots 54 réalisés venus de matière avec le couvercle 14, qui s'étendent verticalement vers le bas depuis la face inférieure 52 et qui sont reçus dans deux trous correspondants 56 formés dans la paroi supérieure plane 18 du support 12.

Après sertissage à chaud des têtes 58 des plots 54, le couvercle 14 est ainsi maintenu fermement sur le support 12 pour pincer les extrémités 46 des premières branches 44 des parties médianes de liaison 38 des lames 16 pour assurer leur effet d'encastrement dans des logements délimités par des surfaces 48 et 50.

Afin de permettre le passage des extrémités incurvées de contact 30 des lames 16 et en partie le passage des secondes branches 42 des parties médianes de liaison 38, le couvercle 14 comporte une série de fentes débouchantes 60 alignées en regard des logements 24 et des lames 16.

Dans le mode de réalisation illustré sur les figures 1 à 5, le connecteur 10 est du type à huit logements 24 mais à six lames de contact 16 et le couvercle 14 ne comporte donc que six fentes débouchantes 60 qui sont parallèles entre elles et opposées deux à deux.

Préalablement à la mise en place du couvercle 14, chaque lame de contact 16 est mise en place dans le support 12 par introduction latérale, c'est-à-dire sensiblement selon une direction parallèle à la direction d'introduction I.

Au cours de cette introduction latérale, une patte latérale d'accrochage en forme de harpon 62 de chaque lame de contact 16 est introduite à force dans une fente correspondante 64 du support 12.

Chaque patte d'accrochage 62 s'étend sensiblement parallèlement à la branche 40 de la partie médiane de liaison 38 à laquelle elle est reliée par une traverse 65.

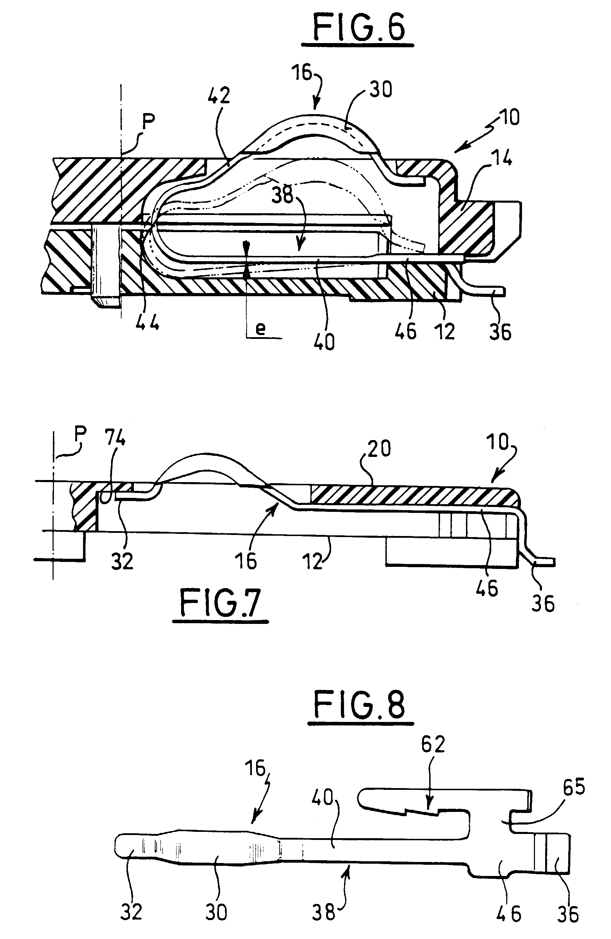

Chaque fente 64 est délimitée vers le haut par un pont transversal 66 réalisé venu de moulage avec le support 12 comme on peut le voir sur la figure 5.

Chaque patte d'accrochage 62 comporte un talon en saillie 68 qui s'étend latéralement vers l'extérieur au-delà de l'extrémité de raccordement 34 de la lame 16 en regard d'une face interne 70 d'une collerette périphérique 72 du couvercle 14 qui s'oppose ainsi à tout échappement latéral accidentel de la lame de contact 16.

En position montée, et comme on peut le voir notamment sur la figure 3, le bec 32 de chaque lame de contact 30 est maintenu en appui élastique contre une portion en vis-à-vis 74 de la face inférieure 52 du couvercle 14 afin de déterminer une position géométrique précise de repos de la partie incurvée de contact 30 de chacune des lames 16 de manière que celle-ci occupe une position géométrique précise et déterminée par rapport au support 12.

Le couvercle 14 maintient ainsi toutes les lames 16 légèrement en précontrainte élastique dans une position géométrique précise.

Cette conception a pour avantage de permettre de faire varier la force d'appui des contacts sur les plots de la carte à mémoire en fonction de la géométrie exact du pliage de la partie médiane de liaison 38, tout en assurant une cote précise de dépassement de la partie de contact incurvée 30 par rapport à la face supérieure 76 du couvercle 14 du connecteur 10.

Le connecteur 10 qui vient d'être décrit présente ainsi une très grande compacité tout en assurant des performances optimales de contact électrique des lames 16 sur les plots d'une carte introduite dans un dispositif de lecture-écriture équipé d'un connecteur selon l'invention.

La mise en place et la fixation des lames 16 dans le support 12 est assurée mécaniquement par verrouillage des pattes d'accrochage en forme de harpon 62 lors de l'assemblage mécanique des lames 16 dans le support ou boîtier 12 moulé préalablement.

On décrira maintenant les variantes de réalisation illustrées sur les figures 6 à 8 sur lesquelles des éléments identiques ou similaires à ceux décrits et représentés précédemment sont désignés par les mêmes chiffres de référence.

Sur la figure 6, le tronçon intermédiaire de chaque lame de contact 16 qui s'étend depuis la portion encastrée 46 jusqu'à la portion incurvée de contact 30 est amincie et présente ainsi une épaisseur "e" réduite par rapport à l'épaisseur de la bande de métal dans laquelle les lames de contact sont réalisées par découpe et pliage.

Cette épaisseur réduite accroît la capacité de déformation élastique de chaque lame de contact et permet d'augmenter la course de fléchissement de chaque lame de contact, et ceci malgré la hauteur totale particulièrement réduite du connecteur.

Pour augmenter encore la course de fléchissement de chaque lame de contact 16, il est possible de prévoir un trou ( non représenté) dans la portion encastrée 46 de la lame, ce trou recevant l'extrémité libre du bec 32 lorsque la lame est en position fléchie.

L'amincissement du tronçon intermédiaire de chaque lame est réalisé par écrasement local, avant la découpe des lames. Ce mode d'obtention de l'amincissement "e" permet d'accroître les caractéristiques mécaniques du matériau dans la zone écrouie par l'écrasement.

Dans ces différentes variantes de réalisation on remarque que la conception du corps en matériau isolant 12 avec un fond 18 et des faces parallèles 26 pour délimiter les logements 24 qui reçoivent les lames de contact 12 est particulièrement avantageuse en ce qu'elle procure une très bonne isolation électrique des contacts l'un par rapport à l'autre. cette isolation est complétée par la conception complémentaire des fentes 60 du couvercle 14.

De plus, en présence d'une carte en position d'utilisation, tous les logements 24 sont fermés de manière quasi-étanche, toute pénétration de poussière ou de tout autre corps étranger dans les alvéoles 24 étant ainsi évitée.

Dans ces modes de réalisation du type à lames de contact en " épingles à cheveux" on remarque que les boucles ou plis médians 44 des lames de contact 16 sont tournées vers le " centre" du connecteur, c'est à dire vers le plan médian P qui, lorsqu'une carte est en position d'utilisation, s'étend sensiblement au droit du centre de plages de contact de la carte à micro-circuit.

Cette conception géométrique permet de conférer au connecteur une très petite longueur hors tout (mesurée dans le sens de la largeur en considérant la figure 3) et donc un très faible encombrement sur la carte à circuit imprimé qui le reçoit.

Dans le mode de réalisation illustré aux figures 7 et 8, chaque lame de contact 16 présente un profil général sensiblement rectiligne et elle s'étend sensiblement dans un plan.

Comme dans les réalisations décrites précédemment, chaque lame de contact 16 est fixée au corps isolant 12 par une patte de fixation en forme de harpon 62.

Le connecteur présente une hauteur globale très réduite du fait de la conception "plane" des lames de contact et du fait de la réalisation du corps du connecteur en une seule pièce moulée, c'est à dire sans couvercle rapporté.

Sans sortir du cadre de l'invention, le connecteur qui vient d'être décrit peut être utilisé dans un dispositif de lecture-écriture dans lequel la carte à mémoire électronique se déplace, par rapport au connecteur, selon une direction perpendiculaire à son plan général et perpendiculaire au plan de la face 20.

Dans une telle application, la conception des lames de contact 16 permet d'obtenir un effet d'auto-nettoyage du fait de la coopération des extrémités incurvées 30 avec les pistes conductrices de la carte lors de la phase finale d'atterrissage de cette dernière.

## Revendications

1. Connecteur électrique (10) pour le raccordement d'une carte à mémoire électronique comportant sur une de ses faces principales une pluralité de plages de contact électrique alignées parallèlement à la direction d'introduction (I) de la carte dans un dispositif de lecture-écriture, le connecteur comportant un support (12) en matériau isolant réalisé par moulage présentant une face plane (20) parallèle à la direction d'introduction (I) de la carte et une pluralité de conducteurs électriques (16) en forme de lames déformables élastiquement (16) disposés parallèlement à la direction (I) d'introduction de la carte, chaque lame (16) de contact comprenant une première extrémité incurvée de contact (30) avec une plage correspondante de la carte, ladite première extrémité faisant saillie hors du plan de la face plane (20) du support (12), une portion médiane de liaison (38) de la lame (16) au support (12) et une seconde extrémité de raccordement (34) de la lame (16) à un circuit de traitement du dispositif de lecture-écriture, caractérisé en ce que la partie médiane de liaison (38) de chaque lame (16) comporte des moyens (62) de fixation de la lame (16) au support (12) qui sont constitués par une patte latérale d'accrochage en forme de harpon (62) qui est reçue dans une fente correspondante (64) du support (12).

2. Connecteur électrique selon la revendication 1, caractérisé en ce que la partie médiane de liaison comporte une première branche (40) dont l'extrémité libre (46) se prolonge par l'extrémité de raccordement (34) de la lame (16).

3. Connecteur électrique selon la revendication 2, caractérisé en ce que l'extrémité libre (46) de la première branche (40) de la partie médiane de liaison (38) de la lame (16) est encastrée dans un logement du support, et en ce que la première branche (40) s'étend en regard d'un logement (24) formé en vis-à-vis dans la face plane (20) du support (12) pour permettre un fléchissement de la première branche (40) selon une direction sensiblement perpendiculaire à la face plane (20) du support (12).

4. Connecteur électrique selon la revendication 3, caractérisé en ce que la patte latérale d'accrochage (62) s'étend parallèlement à la partie médiane de liaison (38) de la lame (16), et en ce qu'elle est reçue dans une fente (64) du support qui est parallèle à la direction générale du logement qui reçoit l'extrémité libre encastrée (46) de la première branche (40) de la partie médiane de liaison (38) de la lame (16).

5. Connecteur électrique selon lune des revendications 3 ou 4, caractérisé en ce que le logement (24) en regard duquel s'étend la première branche (40) de la partie médiane de liaison (38) de la lame (16) comporte un fond (28) qui limite le fléchissement de la première branche (40).

6. Connecteur électrique selon l'une quelconque des revendications précédentes, caractérisé en ce qu'il comporte un couvercle (14) en matériau isolant qui prend appui sur la face plane (20) du support (12) et qui comporte une série de fentes parallèles (60) à travers chacune desquelles fait saillie une extrémité incurvée de contact (30) d'une lame (16).

7. Connecteur électrique selon l'une quelconque des revendications précédentes, caractérisé en ce que l'extrémité incurvée (30) de contact de chaque lame (16) se prolonge par un bec (32) qui est sollicité élastiquement en appui contre une surface de butée (74).

8. Connecteur électrique selon la revendication 7 prise en combinaison avec la revendication 6, caractérisé en ce que la surface de butée est formée en vis-à-vis dans la face interne (52) du couvercle (14) qui s'étend en regard de la face plane (20) du support (12).

9. Connecteur électrique selon l'une quelconque des revendications 3 à 5, caractérisé en ce que la patte latérale d'accrochage (62) est reliée à la première branche (40) de la partie médiane de liaison (38) par une traverse (65) qui s'étend depuis l'extrémité libre encastrée (46) de la première branche (40) de la partie médiane de liaison (38) de la lame (16).

10. Connecteur électrique selon l'une quelconque des revendications précédentes, caractérisé en ce que l'extrémité de raccordement (34) de chaque lame (16) s'étend selon une direction perpendiculaire au plan de la face plane (20) du support (12) en éloignement de la seconde branche (40) de la partie médiane de liaison (38) de la lame (16) et le long d'une face latérale (22) du support (12).

11. Connecteur électrique selon l'une quelconque des revendications précédentes, caractérisé en ce que la partie médiane de liaison (38) de chaque lame (16) est une partie repliée en forme d'épingle à cheveux s'étendant sensiblement parallèlement à la face plane (20) du support (12), comportant la première branche (40) dont l'extrémité libre (46) se prolonge par l'extrémité de raccordement (34) de la lame (16) et qui comporte les moyens (62) de fixation de la lame (16) au support (12), et comportant une seconde branche (42) dont l'extrémité libre se prolonge par l'extrémité incurvée de contact (30) de la lame (16).

12. Connecteur électrique selon la revendication 11, caractérisé en ce que l'extrémité incurvée de contact (30) de chaque lame (16) s'étend sensiblement au droit de l'extrémité libre encastrée (46) de la première branche (40) de la partie médiane de liaison de la lame (16).

13. Connecteur électrique selon l'une quelconque des revendications précédentes, caractérisé en ce que chaque lame de contact (16) est réalisée sous la forme d'une bande métallique découpée et pliée d'épaisseur sensiblement constante, et en ce que chaque bande de contact comporte un tronçon intermédiaire d'épaisseur réduite (e), réalisé notamment par écrasement, qui s'étend entre les extrémités de contact et de raccordement de la lame.

14. Connecteur électrique selon la revendication 13 prise en combinaison avec l'une des revendications 11 ou 12, caractérisé en ce que le tronçon d'épaisseur réduite (e) s'étend entre l'extrémité libre (46) de la première branche et l'extrémité libre de la seconde branche (42).

15. Connecteur électrique selon l'une quelconque des revendications 11, 12 ou 14, caractérisé en ce que l'extrémité incurvée de contact (30) est située longitudinalement entre le pli médian (44) qui relie entre elles les première (40) et seconde (42) branches de la partie médiane de liaison, et l'extrémité de raccordement (34), le pli médian étant tourné vers le centre du connecteur.

## Patentansprüche

1. Elektrischer Verbinder (10) zum Anschließen einer elektronischen Speicherkarte, die an einer ihrer Hauptflächen eine Mehrzahl von parallel zur Einführungsrichtung (I) der Karte in eine Schreib-/Lesevorrichtung ausgerichteten elektrischen Kontaktfeldern aufweist, wobei der Verbinder einen Träger (12) aus isolierendem Material, der durch Abformen gebildet ist und eine zur Einführungsrichtung (I) der Karte parallele Planfläche (20) und eine Mehrzahl von elektrischen Leitern (16) in Form von elastisch verformbaren Zungen (16) aufweist, die parallel zur Einführungsrichtung (I) der Karte angeordnet sind, wobei jede Kontaktzunge (16) ein erstes gekrümmtes Kontaktende (30) für den Kontakt mit einem entsprechenden Feld der Karte, welches erste Ende über die Ebene der Planfläche (20) des Trägers (12) übersteht, einen mittleren Verbindungsabschnitt (38) der Zunge (16) zum Träger (12) und ein zweites Ende zum Anschließen (34) der Zunge (16) an eine Verarbeitungsschaltung der Schreib-/Lesevorrichtung umfaßt, dadurch gekennzeichnet, daß der mittlere Verbindungsbereich (38) jeder Zunge (16) Mittel (62) zum Befestigen der Zunge (16) an dem Träger (12) umfaßt, die durch einen seitlichen Einhakfuß in Widerhakenform (62) gebildet sind, der in einem entsprechenden Schlitz (64) des Trägers (12) aufgenommen ist.

2. Elektrischer Verbinder nach Anspruch 1, dadurch gekennzeichnet, daß der mittlere Verbindungsbereich einen ersten Ast (40) aufweist, dessen freies Ende (46) durch das Anschlußende (34) der Zunge (16) verlängert ist.

3. Elektrischer Verbinder nach Anspruch 2, dadurch gekennzeichnet, daß das freie Ende (46) des ersten Astes (40) des mittleren Verbindungsbereiches (38) der Zunge (16) in eine Aussparung des Trägers eingespannt ist, und daß der erste Ast (40) sich vor einer gegenüberliegend in der Planfläche (20) des Trägers (12) gebildeten Aussparung (24) erstreckt, um ein Durchbiegen des ersten Astes (40) in einer im wesentlichen zur Planfläche (20) des Trägers (12) senkrechten Richtung zu ermöglichen.

4. Elektrischer Verbinder nach Anspruch 3, dadurch gekennzeichnet, daß der seitliche Einhakfuß (62) sich parallel zum mittleren Verbindungsbereich (38) der Zunge (16) erstreckt, und daß er in einem Schlitz (64) des Trägers aufgenommen ist, der parallel zur allgemeinen Richtung der Aussparung ist, die das eingespannte freie Ende (46) des ersten Astes (40) des mittleren Verbindungsbereiches (38) der Zunge (16) aufnimmt.

5. Elektrischer Verbinder nach einem der Ansprüche 3 oder 4, dadurch gekennzeichnet, daß die Aussparung (24), vor der sich der erste Ast (40) des mittleren Verbindungsbereiches (38) der Zunge (16) erstreckt, einen Boden (28) aufweist, der die Durchbiegung des ersten Astes (40) begrenzt.

6. Elektrischer Verbinder nach einem beliebigen der vorhergehenden Ansprüche, dadurch gekennzeichnet, daß er einen Deckel (14) aus isolierendem Material umfaßt, der auf der Planfläche (20) des Trägers (12) aufliegt und der eine Serie von parallelen Schlitzen (60) umfaßt, wobei durch jeden der Schlitze ein gekrümmtes Kontaktende (30) einer Zunge (16) übersteht.

7. Elektrischer Verbinder nach einem beliebigen der vorhergehenden Ansprüche, dadurch gekennzeichnet, daß das gekrümmte Kontaktende (30) jeder Zunge (16) durch einen Schnabel (32) verlängert ist, der in Anlage an einer Anschlagoberfläche (74) elastisch beansprucht ist.

8. Elektrischer Verbinder nach Anspruch 7 in Kombination mit Anspruch 6, dadurch gekennzeichnet, daß die Anschlagoberfläche gegenüberliegend an der Innenfläche (52) des Deckels (14) gebildet ist, die sich der Planfläche (20) des Trägers (12) zugewandt erstreckt.

9. Elektrischer Verbinder nach einem der Ansprüche 3 bis 5, dadurch gekennzeichnet, daß der seitliche Einhakfuß (62) mit dem ersten Ast (40) des mittleren Verbindungsbereiches (38) durch einen Querträger (65) verbunden ist, der sich von dem eingespannten freien Ende (46) des ersten Astes (40) des mittleren Verbindungsbereiches (38) der Zunge (16) aus erstreckt.

10. Elektrischer Verbinder nach einem beliebigen der vorhergehenden Ansprüche, dadurch gekennzeichnet, daß das Anschlußende (34) jeder Zunge (16) sich in einer zur Ebene der Planfläche (20) des Trägers (12) senkrechten Richtung vom zweiten Ast (40) des mittleren Verbindungsbereiches (38) der Zunge (16) fort und entlang einer Seitenfläche (22) des Trägers (12) erstreckt.

11. Elektrischer Verbinder nach einem beliebigen der vorhergehenden Ansprüche, dadurch gekennzeichnet, daß der mittlere Verbindungsbereich (38) jeder Zunge (16) ein in Form einer Haarnadel gebogener Bereich ist, der sich im wesentlichen parallel zur Planfläche (20) des Trägers (12) erstreckt, den ersten Ast (40) umfaßt, dessen freies Ende (46) durch das Anschlußende (34) der Zunge (16) verlängert ist, und der Mittel (62) zum Befestigen der Zunge (16) am Träger (12) umfaßt, und der einen zweiten Ast (42) umfaßt, dessen freies Ende durch das gekrümmte Kontaktende (30) der Zunge (16) verlängert ist.

12. Elektrischer Verbinder nach Anspruch 11, dadurch gekennzeichnet, daß das gekrümmte Kontaktende (30) jeder Zunge (16) sich im wesentlichen über dem eingespannten freien Ende (46) des ersten Astes (40) des mittleren Verbindungsbereiches der Zunge (16) erstreckt.

13. Elektrischer Verbinder nach einem beliebigen der vorhergehenden Ansprüche, dadurch gekennzeichnet, daß jede Kontaktzunge (16) in Form eines ausgeschnittenen und gebogenen metallischen Streifens von im wesentlichen konstanter Dicke ausgebildet ist, und daß jeder Kontaktstreifen einen Zwischenabschnitt von verringerter Dicke (e) umfaßt, der insbesondere durch Flachdrücken gebildet ist und der sich zwischen dem Kontaktende und dem Anschlußende der Zunge erstreckt.

14. Elektrischer Verbinder nach Anspruch 13 in Kombination mit einem der Ansprüche 11 oder 12, dadurch gekennzeichnet, daß der Abschnitt von verringerter Dicke (e) sich zwischen dem freien Ende (46) des ersten Astes und dem freien Ende des zweiten Astes (42) erstreckt.

15. Elektrischer Verbinder nach einem beliebigen der Ansprüche 11, 12 oder 14, dadurch gekennzeichnet, daß das gekrümmte Kontaktende (30) in Längsrichtung zwischen der mittleren Biegung (44), die den ersten (40) und den zweiten Ast (42) des mittleren Verbindungsbereiches verbindet, und dem Anschlußende (34) angeordnet ist, wobei die mittlere Biegung zur Mitte des Verbinders hingewandt ist.

## Claims

1. Electrical connector (10) for the connection of an electronic memory card, containing, on one of its main faces, a number of electrical contact pads aligned parallel to the direction of insertion (I) of the card into a read/write device, the connector containing a support (12) made of insulating material, produced by moulding, having a plane face (20) parallel to the direction of insertion of the card and a number of electrical conductors (16) in the form of elastically deformable blades (16) arranged extend parallel to the direction of insertion (I) of the card, each contact blade (16) comprising a first incurvate end (30) for contacting one corresponding pad of the card, said first end projecting from the plane of the plane face (20) of the support, a central portion (38) for connecting the blade (16) to the support (12) and a second end (34) for connecting the blade (16) to a processing circuit of the read/write device, **characterised in that** the central connecting part (38) of each blade (16) contains means (62) for fixing the blade (16) to the support (12), which are formed by a lateral harpoon-shaped latching foot (62) which is received in a corresponding slot (64) of the support (12).

2. Electrical connector according to Claim 1, **characterised in that** the central connecting part contains a first limb (40) whose free end (46) is extended by the connection end (34) of the blade (16).

3. Electrical connector according to Claim 2, **characterised in that** the free end (46) of the first limb (40) of the central connecting part (38) of the blade (16) is embedded in a compartment of the support, and in that the first limb (40) extends opposite a compartment (24) formed opposingly in the plane face (20) of the support (12) in order to permit flexing of the first limb (40) in a direction substantially perpendicular to the plane face (20) of the support (12).

4. Electrical connector according to Claim 3, **characterised in that** the lateral latching foot (62) extends parallel to the central connecting part (38) of the blade (16) and in that it is received in a slot (64) of the support which is parallel to the general direction of the compartment which receives the embedded free end (46) of the first limb (40) of the central connecting part (38) of the blade (16).

5. Electrical connector according to one of Claims 3 or 4, **characterised in that** the compartment (24), opposite which the first limb (40) of the central connecting part (38) of the blade (16) extends, contains a base (28) which limits the flexing of the first limb (40).

6. Electrical connector according to any one of the preceding Claims, **characterised in that** it contains a cover (14) made of insulating material, which bears on the plane face (20) of the support (12) and which contains a series of parallel slots (60) through each of which projects an incurvate contacting end (30) of a blade (16).

7. Electrical connector according to any one of the preceding Claims, **characterised in that** the incurvate contacting end (30) of each blade (16) is extended by a nose (32) which is elastically loaded so as to bear against a stop surface (74).

8. Electrical connector according to Claim 7, taken in combination with Claim 6, **characterised in that** the stop surface is formed opposingly in the internal face (52) of the cover (14) which extends opposite the plane face (20) of the support (12).

9. Electrical connector according to one of Claims 3 to 5, **characterised in that** the lateral latching foot (62) is connected to the first limb (40) of the central connecting part (38) by a crosspiece (65) which extends from the embedded free end (46) of the first limb (40) of the central connecting part (38) of the blade (16).

10. Electrical connector according to any one of the preceding Claims, **characterised in that** the connection end (34) of each blade (16) extends in a direction perpendicular to the plane of the plane face (20) of the support (12) going away from the second limb (40) of the central connecting part (38) of the blade (16) and along a lateral face (22) of the support (12).

11. Electrical connector according to any one of the preceding Claims, **characterised in that** the central connecting part (38) of each blade (16) is a part folded over into the shape of a hairpin extending substantially parallel to the plane face (20) of the support (12), containing the first limb (40) whose free end (46) is extended by the connection end (34) of the blade (16) and which contains the means (62) for fixing the blade (16) to the support (12), and containing a second limb (42) whose free end is extended by the incurvate contacting end (30) of the blade (16).

12. Electrical connector according to Claim 11, **characterised in that** the incurvate contacting end (30) of each blade (16) extends substantially in line with the embedded free end (46) of the first limb (40) of the central connecting part of the blade (16).

13. Electrical connector according to any one of the preceding Claims, **characterised in that** each contact blade (16) is produced in the form of a cut-out and folded metal strip of substantially constant thickness, and in that each contact strip contains an intermediate section of reduced thickness (e), produced in particular by compression, which extends between the contacting and connecting ends of the blade.

14. Electrical connector according to Claim 13, taken in combination with one of Claims 11 or 12, **characterised in that** the section of reduced thickness (e) extends between the free end (46) of the first limb and the free end of the second limb (42).

15. Electrical connector according to any one of Claims 11, 12 and 14, **characterised in that** the incurvate contacting end (30) is located longitudinally between the central fold (44) which connects together the first (40) and second (42) limbs of the central connecting part, and the connection end (34), the central fold being turned towards the centre of the connector.
